# EUROPÄISCHE PATENTSCHRIFT

(11) **EP 2 485 917 B1**
(45) Veröffentlichungstag und Bekanntmachung des Hinweises auf die Patenterteilung: **09.11.2016**
(21) Anmeldenummer: 10763315.8
(22) Anmeldetag: 21.09.2010
(51) Int. Cl.: B60M 1/234, B60M 1/30

(54) **STROMSCHIENENHALTEVORRICHTUNG**
POWER RAIL HOLDER
DISPOSITIF DE MAINTIEN DE RAIL CONDUCTEUR

(30) Priorität: 09.10.2009 DE 102009048869
(43) Veröffentlichungstag der Anmeldung: 15.08.2012
(73) Patentinhaber: Furrer + Frey AG, 3005 Bern (CH)
(72) Erfinder: FURRER, Beat, CH-3012 Bern (CH)
(74) Vertreter: von Bülow, Tam
(86) Internationale Anmeldenummer: PCT/EP2010/005771
(87) Internationale Veröffentlichungsnummer: WO 2011/042118

(56) Entgegenhaltungen:
- WO-A1-03/045727
- DE-C- 371 616
- DE-U1-202004 009 416

## Beschreibung

Die Erfindung bezieht sich auf eine Stromschienenhaltevorrichtung.

Aus der WO 03/045727 A1 ist eine Befestigungseinrichtung für Verstärkungsleitungen für Oberleitungen bekannt, bei der die Verstärkungsleitung an einer Seilklemme gehalten ist, die am unteren Ende eines Isolators schwenkbar und/oder drehbar befestigt. Ein oberes Ende des Isolators ist mit einem Verbindungsteil an einer Tunnel- oder Bauwerksdecke befestigbar. Das Schwenken der Seilklemme kann um eine Schwenkachse erfolgen, die parallel zur Längserstreckung der Verstärkungsleitung liegt. Zusätzlich oder alternativ kann die Seilklemme auch um eine Achse gedreht werden, die senkrecht zur Fahrebene steht.

Die DE 371 616C zeigt einen Isolatorenhalter für den Fahrdraht elektrischer Grubenbahnen, bei der eine Fahrleitung an einem Isolator aufgehängt ist, der über ein Gestänge an einer Kappenschiene befestigt ist. Beide Enden des Gestänges haben ein feststellbares Gelenk, um die Höhenlage der Fahrleitung einstellen zu können. Während des normalen Betriebes sind die Gelenke festgestellt, um die Höhenlage der Fahrleitung zu fixieren.

Eine solche Vorrichtung ist aus der DE 20 2004 009 416 U1 bekannt. Diese Stromschienenhaltevorrichtung hat eine ortsfest anbringbare Halteplatte und einen federelastisch gegenüber der Halteplatte verschieblich gelagerten Dorn, an dessen einen Ende eine Anschlußplatte zur Befestigung einer Stromschiene angebracht ist. Der Dorn ist in einer Bohrung einer Hülse verschieblich und drehbar gelagert. Zur Justierung der Höhenlage der Stromschiene hat die Hülse ein Außengewinde, das in ein ortsfestes, mit der Halteplatte starr verbundenes Innengewinde einschraubbar ist.

Die Halteplatte der Stromschienenanordnung ist an einem Tragwerk befestigt, das einen Isolator und ein Tragrohr aufweist, die an einer ortsfesten Halterung, wie z.B. einer Tunnelwand, befestigt sind. Durch die elastische Lagerung des Eigengewichtes der Stromschiene läßt sich ein gutes dynamisches Verhalten der Stromschiene erreichen, da zwangsläufig durch den Stromabnehmer eines vorbeifahrenden Fahrzeuges induzierte Schwingungen gedämpft werden. Auch erhält man gleichmäßige Kontaktkräfte zwischen Stromabnehmer und Fahrdraht bzw. Stromschiene, damit eine bessere Stromübertragung und weniger Funkenbildung sowie zusätzlich einen geringeren Verschleiß am Stromabnehmer und dem Fahrdraht bzw. der Stromschiene.

Trotz der elastischen Lagerung der Stromschiene, die eine Verschiebung der Stromschiene senkrecht zur Fahrebene (z-Achse) gestattet, besteht bei der bekannten Stromschienenhaltevorrichtung das Problem, daß die Hauptachse der Stromschienenhaltevorrichtung nicht genau senkrecht zur Fahrebene montiert ist. Dadurch können sich Zwängungen an der Stromschiene ergeben, welche vor und hinter dem Tragwerk einen Einfluß auf Durchhänge in angrenzenden Feldern haben. Durch die genannten Zwängungen werden Biegemomente auf die Stromschiene übertragen und die Stromschiene in Fahrtrichtung verbogen, so daß der Abstand zwischen Stromschiene und Gleis nicht konstant ist. Auch bewirken die genannten Zwängungen, daß durch einen vorbeifahrenden Zug in der Stromschiene erregte Schwingungen an Tragwerken reflektiert werden, wodurch eine "Aufschaukelung" der gesamten Anlage auftreten kann, bis hin zu Resonanzerscheinungen. Bei den heute üblichen Abständen aufeinanderfolgender Tragwerke für Stromschienen treten diese negativen Erscheinungen insbesondere bei höheren Geschwindigkeiten von ca. 250 km/h auf, was im Hinblick auf die immer höheren geforderten Fahrgeschwindigkeiten von Eisenbahnen nicht hinnehmbar ist.

Aufgabe der Erfindung ist es, die Stromschienenhaltevorrichtung der eingangs genannten Art dahingehend zu verbessern, daß sie auch bei nicht exakt gegenüber der Fahrebene ausgerichtetem Tragwerk eine optimale Lage und Ausrichtung der Stromschiene ermöglicht. Eine mit einer solchen Stromschienenhaltevorrichtung ausgestattete Strecke soll störungsfrei mit Geschwindigkeiten von über 250 km/h befahrbar sein.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Das Grundprinzip der Erfindung liegt darin, die Stromschienenhaltevorrichtung gelenkig auszugestalten. Dadurch werden die eingangs genannten Zwängungen vermieden. Die Stromschiene ist längsgelenkig gelagert und macht bei Anregung durch von einem Stromabnehmer verursachte Kräfte wesentlich weniger Schwingungen und kommt auch vergleichsweise schneller wieder in die Ruhelage. Schwingungen an der Stromschiene und den Tragwerken werden durch den Einbau des Gelenks nicht mehr reflektiert, so daß sich dadurch auch keine Aufschaukelung der Anlage mehr ergibt.

Im folgenden wird die Erfindung anhand eines Ausführungsbeispieles im Zusammenhang mit der Zeichnung ausführlicher erläutert. Es zeigt:
- Fig. 1: eine Ansicht eines Tragwerkes für eine Stromschienenanlage mit einer Haltevorrichtung nach der Erfindung gesehen in Fahrtrichtung;
- Fig. 2a und 2b: Prinzipskizzen einer Haltevorrichtung nach dem Stand der Technik bei korrekter und inkorrekter Montage;
- Fig. 3 und 3b: Prinzipskizzen eines Tragwerkes mit Haltevorrichtung nach der Erfindung bei korrekter und inkorrekter Montage;
- Fig. 4: eine Seitenansicht der Stromschienenhaltevorrichtung nach einem Ausführungsbeispiel der Erfindung, gesehen quer zur Fahrtrichtung;
- Fig. 5: eine Ansicht der Stromschienenhaltevorrichtung nach einem Ausführungsbeispiel der Erfindung gesehen in Fahrtrichtung;
- Fig. 6: eine vergrößerte Detailansicht als Schnitt längs der Linie A-A der Fig. 5; und
- Fig. 7: einen Schnitt längs der Linie B-B der Fig. 6.

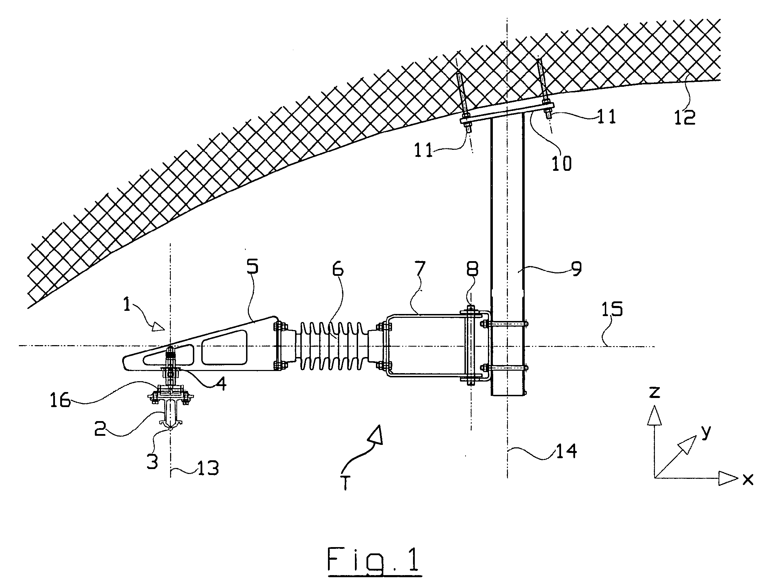

Fig. 1 zeigt eine Stromschienenhaltevorrichtung 1, die eine Stromschiene 2 mit eingeklemmtem Fahrdraht 3 hält. Die Stromschienenhaltevorrichtung ist an einem Tragwerk T befestigt, das aus einer Trageinrichtung 5, einem Isolator 6, einer Isolatorhalterung 7, einem Schwenkgelenk 8, einem Tragrohr 9, einer Befestigungsplatte 10 und Befestigungsschrauben 11 besteht, wobei das Tragwerk T über die Befestigungsschrauben 11 hier an einer Tunnelwand 12 befestigt ist. Fig. 1 zeigt eine Ansicht gesehen in Fahrtrichtung. Bei ordnungsgemäßer Montage soll eine Hauptachse 13 der Stromschienenhaltevorrichtung 1 genau senkrecht zu einer Fahrebene stehen, d.h. zur xy-Ebene und damit exakt parallel zu einer z-Achse eines karthesischen Koordinatensystems x, y, z. Bei der hier gezeigten Anordnung stehen die Achse 13 der Stromschienenhaltevorrichtung und eine Achse 14 des Tragrohres 9 bei richtiger Montage genau parallel zueinander und senkrecht zur Fahrebene. Eine Achse 15 des Isolators 6 steht senkrecht zu den beiden Achsen 13 und 14. Es sei allerdings darauf hingewiesen, daß auch andere Anordnungen möglich sind. Wichtig ist nur, daß die Achse 13 im Idealfall bei korrekter Montage möglichst genau senkrecht zur Fahrebene steht, was jedoch nicht immer der Fall ist, da die Tunnelwand 12 im Regelfall gekrümmt ist oder sonstige Unebenheiten aufweist, so daß die Achse 14 des Tragrohres 9 nicht immer exakt parallel zur z-Achse steht, sondern sowohl gegenüber der x-Achse als auch gegenüber der y-Achse unter einem von 90° verschiedenen Winkel geneigt sein kann.

Damit ist auch die Achse 13 der Stromschienenhaltevorrichtung in der Praxis nicht immer exakt senkrecht zur Fahrebene ausgerichtet. Hierdurch ergeben sich die eingangs genannten Zwängungen.

Die Stromschienenhaltevorrichtung 1 nach der Erfindung stellt eine gelenkige Verbindung zwischen der Stromschiene 2 und dem Tragwerk T her. Von besonderem Vorteil ist es, wenn die Stromschiene 2 gegenüber dem Tragwerk T pendeln kann, so daß sich der durch die Stromschiene 2 verlaufende Teil der Achse 13 im Ruhezustand genau senkrecht zur Fahrebene ausrichtet, auch wenn das Tragwerk T insgesamt und insbesondere das Tragrohr 9 nicht korrekt montiert sind, insbesondere die Achse 14 des Tragrohres 9 in einer yz-Ebene gegenüber der z-Achse einen von Null verschiedenen Winkel hat. Bei Schwingungen der Stromschiene 2 kann durch ein Pendeln der Befestigung und ggf. eine Änderung der Höhenlage eine unerwünschte Kraftübertragung von der Stromschiene auf das Tragwerk vermieden werden.

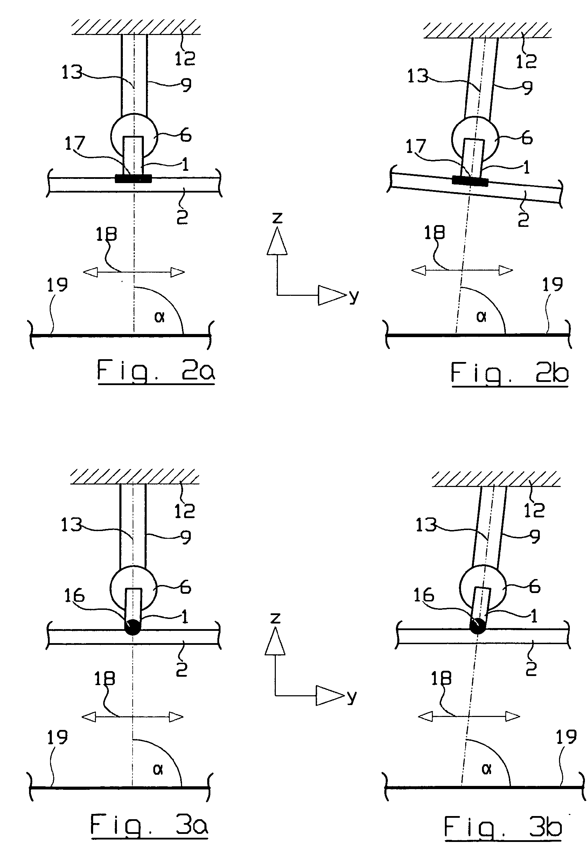

Die Fig. 2 und 3 verdeutlichen die Problemstellung und die Lösung der Erfindung. Die Fig. 2 und 3 zeigen in rein schematischer Weise eine Ansicht der Stromschiene und eines Tragwerkes in Seitenansicht gesehen quer zur Fahrtrichtung 18. In den Fig. 2a und 3a ist die Stromschienenhaltevorrichtung 1 korrekt montiert, d.h. die Achse 13 ist exakt parallel zur z-Achse ausgerichtet, d.h. ihr Winkel α zur Fahrschiene 19 beträgt exakt 90°. Damit verläuft auch die Stromschiene 2 exakt parallel zur Fahrschiene 19. In den Fig. 2a und 2b ist die Stromschiene durch eine starre Verbindung 17 an der Stromschienenhaltevorrichtung 1 befestigt.

Wird nun gemäß Fig. 2b das Tragwerk nicht korrekt montiert und ausgerichtet, dergestalt, daß die Achse 13 gegenüber der Fahrschiene 19 einen Winkel α von ungleich 90° aufweist, so wird durch die starre Verbindung 17 zwischen der Stromschienenhaltevorrichtung 1 und der Stromschiene 2 ein Biegemoment auf die Stromschiene 2 ausgeübt, so daß diese im Bereich des Tragwerkes verbogen und damit gekippt wird, wie deutlich in Fig. 2b dargestellt, wobei der dort gezeigte Winkel α zur Verdeutlichung übertrieben groß dargestellt ist. Dieses Biegemoment wird dann auch auf das Tragwerk übertragen, was zur Anregung von Schwingungen und den Zwängungen führt.

In den Fig. 3a und 3b sind analoge Fälle dargestellt, jedoch nunmehr mit einem Schwenkgelenk 16 gemäß der Erfindung. Man erkennt, daß unabhängig von dem Winkel α die Stromschiene 2 stets parallel zur Fahrschiene 19 ausgerichtet bleibt und aufgrund der gelenkigen Verbindung zwischen der Stromschienenhaltevorrichtung 1 und der Stromschiene 2 keine Biegemomente auf die Stromschiene 2 wirken können, auch wenn das Tragwerk nicht exakt montiert und ausgerichtet ist.

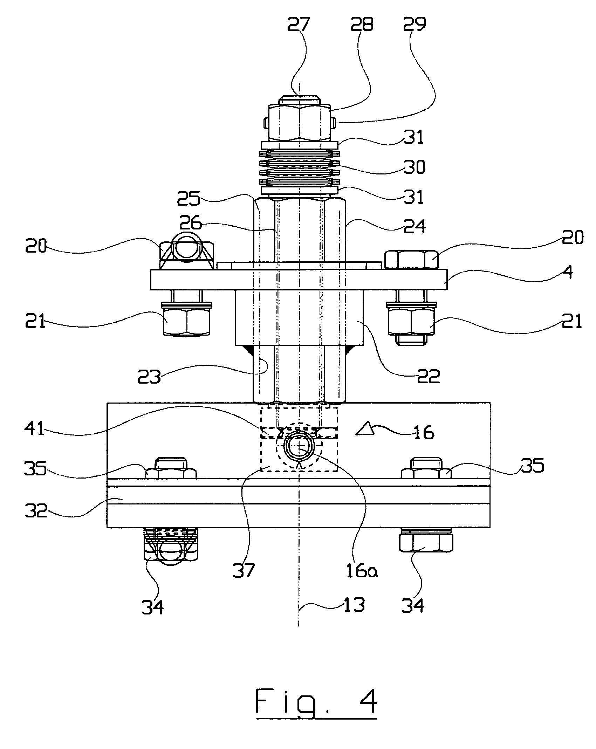

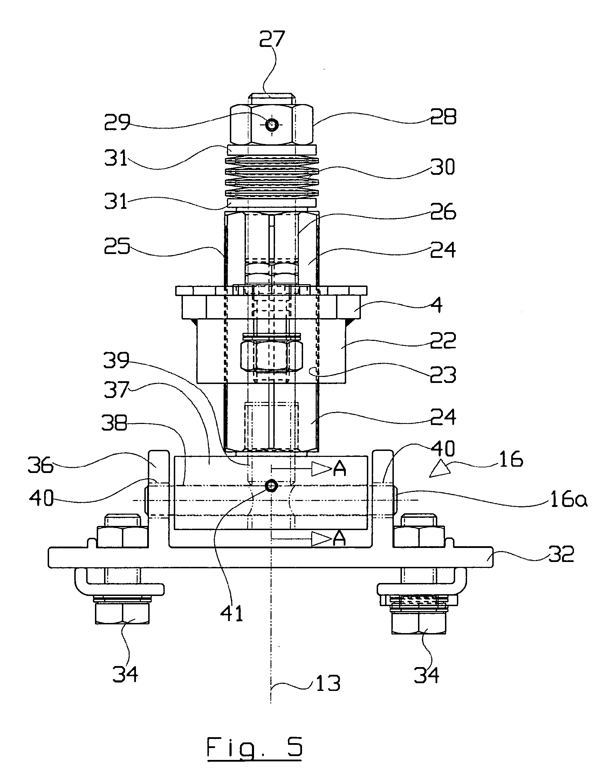

Die Fig. 4 und 5 zeigen ein konkretes Ausführungsbeispiel der Erfindung in Seitenansicht (Fig. 4) gesehen parallel zur Fahrtrichtung und in Stirnansicht (Fig. 5) gesehen in Fahrtrichtung.

In den Fig. 4 und 5 ist die Halteplatte 4 zu sehen, mit der die Stromschienenhaltevorrichtung 1 an dem ortsfesten Tragwerk T der Fig. 1 befestigt wird und zwar über mehrere Schrauben 20 und Muttern 21. An der Halteplatte 4 ist eine erste Hülse 22 befestigt, beispielsweise angeschweißt, wobei diese erste Hülse 22 ein Innengewinde 23 aufweist, in das eine zweite Hülse 24, die ein Außengewinde 25 aufweist, einschraubbar ist. Das Außengewinde 25 erstreckt sich nur über einen Teil der zweiten Hülse 24, die zumindest an ihrem oberen, der Stromschiene abgewandten Ende einen Sechskantkopf trägt. Es ist auch möglich, daß die zweite Hülse 24 über ihre gesamte Länge einen sechseckigen Querschnitt hat, wobei sich dann das Außengewinde 25 nur im Bereich der Ecken befindet, sich jedoch über die gesamte Länge der zweiten Hülse 24 erstrecken kann.

Die zweite Hülse 24 hat eine mittige Durchgangsbohrung 26, in die ein zylindrischer Dorn 27 einsetzbar ist. Der Dorn 27 hat an seinem oberen, der Stromschiene 2 abgewandten Ende ein Außengewinde, auf das eine Mutter 28 aufschraubbar ist, die mit einem Sicherungsstift 29 in Drehrichtung fixiert werden kann. Zwischen der Oberseite der zweiten Hülse 24 und der Unterseite der Mutter 28 ist eine Feder 30 angeordnet. Hierbei kann es sich auch um ein Paket aus mehreren Tellerfedern handeln. Die Feder 30 ist zwischen zwei Ringscheiben 31 abgestützt.
Der Dorn 27 ist in der Durchgangsbohrung 26 um seine Längsachse drehbar gelagert.

Am unteren, der Stromschiene 2 zugewandten Ende des Dornes 27 ist eine Anschlußplatte 32 befestigt und zwar über ein Gelenk 16, das weiter unten noch ausführlicher beschrieben wird.

An der Anschlußplatte 32 wird in herkömmlicher Weise die hier nicht dargestellte Stromschiene 2 mittels Befestigungswinkeln 33, Schrauben 34 und Muttern 35 befestigt.

Die Anschlußplatte 32 ist über das Gelenk 16 schwenkbar an dem Dorn 27 angelenkt, wobei eine Pendelachse 16a quer zur Fahrtrichtung bzw. quer zur Längsachse der Stromschiene angeordnet ist. Bezogen auf das in Fig. 1 definierte karthesische Koordinatensystem liegt die Pendelachse 16a, also parallel zur x-Achse.

Die Anschlußplatte 32 hat auf ihrer der Stromschiene 2 abgewandten Oberseite zwei parallele Wände 36, die jeweils ein Gleitlager 40 für die Aufnahme der Pendelachse 16a haben. Die Pendelachse 16a ist in ein Pendellager 37 eingesetzt, das zwischen den beiden Wänden 36 angeordnet ist und eine Bohrung 38 zur Aufnahme der Pendelachse 16a sowie eine Gewindebohrung 39 aufweist, in die das untere freie Ende des Dorns 27 mit einem Gewinde einschraubbar ist.

Bei der Montage wird das Pendellager 37 zwischen die beiden Wände 36 der Anschlußplatte 32 eingesetzt. Anschließend wird die Pendelachse 16a durch die Bohrungen der Gleitlager 40 in den Wänden 36 und die Bohrung 38 in dem Pendellager 37 hindurchgesteckt. Sodann wird der Dorn 27 in die Gewindebohrung 39 des Pendellagers 37 eingeschraubt, bis er auf der Pendelachse 16a ansteht. Anschließend wird im Übergangsbereich zwischen der unteren Stirnseite des Dornes 27 und dem Pendellager 16 eine Bohrung durchgeführt und ein Sicherungsstift 41 eingesetzt. Der Sicherungsstift 41 kann auch als Scherspannstift ausgebildet sein.

In den Fig. 4 und 5 ist die Feder 30 im unbelasteten Zustand dargestellt. Ist die Stromschiene 2 montiert, so wird das Gewicht der Stromschiene 2 über den Dorn 27 und die Mutter 28 von der Feder 30 getragen, so daß zwischen der unteren Stirnseite der ersten Hülse 24 und der Oberseite des Pendellagers 37 ein größerer Abstand vorhanden ist, der ein Pendeln der Anschlußplatte 32 um die Pendelachse 16a gestattet.

Die Gewindebohrung 39 in dem Pendellager 37 ist hier als vollständig durch das Pendellager 37 hindurchgehend dargestellt. Es genügt aber, diese Gewindebohrung 39 nur bis zur Bohrung 38, die das Pendellager 16 aufnimmt, gehen zu lassen.

Schwingungen der Stromschiene breiten sich in Form von Wellen in Längsrichtung der Stromschiene aus und haben damit sowohl eine Lageänderung der Stromschiene, durch die der Abstand zwischen Stromschiene und Fahrschiene verändert wird, als auch Biegeschwingungen, die sich als Torsion der Stromschiene auswirken, zur Folge. Die erst genannten Lageänderungen werden durch die federnde Aufhängung mit der Feder 30 abgefangen, während die zweit genannten Torsionsschwingungen durch ein Pendeln der Stromschiene und der Anschlußplatte 32 abgefangen werden, so daß an den jeweiligen Tragwerken keine Biegemomente auf den Dorn 27 und das Tragwerk übertragen werden, wodurch keine Reflektionen entstehen und Schwingungen rasch abklingen und Resonanzerscheinungen vermieden werden.

Schwingungen der Stromschiene parallel zur Fahrebene werden zusätzlich dadurch abgefangen, daß der Dorn 27 in den beiden Hülsen 24 und 22 drehbar gelagert ist, so daß auch die Anschlußplatte 32 und damit die Stromschiene jeweils im Bereich des Tragwerkes um die Achse 13 gedreht werden kann. Eine mit der Stromschienenhaltevorrichtung nach der Erfindung ausgestattete Strecke kann damit auch mit erheblich höheren Geschwindigkeiten befahren werden.

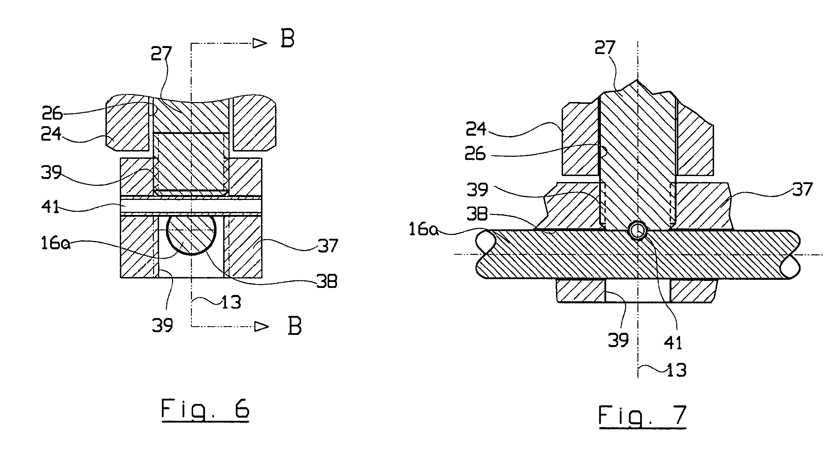

Fig. 6 zeigt einen Schnitt längs der Linie A-A der Fig. 5 in vergrößerter Darstellung. Man erkennt hier deutlicher das Pendellager 37, in dessen Längsbohrung 38 die Pendelachse 16a eingesetzt ist sowie auch den Sicherungsstift 41, der im Übergangsbereich zwischen der Pendelachse 16a und dem Dorn 27 vorhanden ist. Weiter ist die zweite Hülse 24 mit ihrer Durchgangsbohrung 26 zu sehen, in die der Dorn eingesetzt ist. Auch ist zu sehen, daß zumindest das untere Ende des Dornes 27 ein Außengewinde hat, das in ein Innengewinde 39 des Pendellagers einschraubbar is.

Fig. 7 zeigt einen Schnitt längs der Linie B-B der Fig. 6 in vergrößerter Darstellung. Dort ist besonders deutlich zu erkennen, daß der Dorn 27 so weit in das Pendellager 37 eingeschraubt wird, bis seine Stirnfläche die Pendelachse 16a berührt und daß der Sicherungsstift 41 genau im Übergangsbereich zwischen dem Dorn 27 und der Pendelachse 16a angebracht ist, so daß beide Teile hierdurch gekoppelt werden und eine Längsverschiebung der Pendelachse 16a gegenüber dem Dorn 27 nicht nur durch Reibkräfte zwischen Dorn und Pendelachse, sondern auch durch einen Formschluß aufgrund des Sicherungsstiftes 41 unterbunden ist.

## Patentansprüche

1. Stromschienenhaltevorrichtung mit einer Anschlußplatte (32), an der eine Stromschiene (2) befestigbar ist, wobei die Anschlußplatte (32) mit einem Dorn (27) verbunden ist, der mit einem ortsfesten Tragwerk (5, 6, 7, 9) verbindbar ist, **dadurch gekennzeichnet,**
**daß** die Anschlußplatte (32) über ein Gelenk (16) mit dem Dorn (27) verbunden ist,
**daß** die Anschlußplatte (32) in Richtung quer zur Längserstreckung der Stromschiene starr befestigt ist,
**daß** die Anschlußplatte (32) zwei im Abstand zueinander verlaufende und von der Anschlußplatte (32) abstehende Wände (36) aufweist, die je eine Bohrung (40) haben, in die die Pendelachse (16a) eingesetzt ist,
**daß** die Pendelachse (16a) in einer Bohrung (38) eines zwischen den Wänden (36) angeordneten Pendellagers (37) angeordnet ist und daß das Pendellager (37) eine quer zur Pendelachse (16a) angeordnete Gewindebohrung aufweist, in die ein Ende des Domes (27) eingeschraubt ist.

2. Stromschienenhaltevorrichtung nach Anspruch 1, **dadurch gekennzeichnet,**
**daß** das Gelenk (16) ein Schwenkgelenk ist, dessen Pendelachse (16a) quer zur Längserstreckung der Stromschiene (2) angeordnet ist.

3. Stromschienenhaltevorrichtung nach Anspruch 1 oder 2, **dadurch gekennzeichnet,**
**daß** der Dorn (27) um seine Längsachse drehbar gelagert ist und damit die Anschlußplatte (32) um die Längsachse des Domes (27) drehbar ist.

4. Stromschienenhaltevorrichtung nach Anspruch 1, **dadurch gekennzeichnet,**
**daß** das Ende des Domes (27) mit der Pendelachse (16a) in Kontakt steht.

5. Stromschienenhaltevorrichtung nach einem der Ansprüche 1 oder 4, **dadurch gekennzeichnet,**
**daß** das Pendellager (37) eine quer zum Dom (27) und quer zur Pendelachse (16a) verlaufende Bohrung aufweist, die auch teilweise durch das Ende des Domes (27) und die Pendelachse (16a) hindurchgeht und daß in diese Bohrung ein Sicherungsstift (41) eingesetzt ist.

6. Stromschienenhaltevorrichtung nach einem der Ansprüche 1 bis 5, **dadurch gekennzeichnet,**
**daß** der Dorn (27) und damit die Anschlußplatte (32) in Längsrichtung des Domes (27) federelastisch verschiebbar gelagert sind.

## Claims

1. Power rail holding device with a mounting plate (32) at which a power rail (2) is fixable, wherein the mounting plate (32) is connected to a bolt (27) that is connectible to a stationary supporting structure (5, 6, 7, 9), **characterized in**
**that** the mounting plate (32) is connected to the bolt (27) via a hinge (16),
**that** the mounting plate (32) is rigidly fixed in a direction traverse to the longitudinal extension of the power rail,
**that** the mounting plate (32) includes two walls (36) that run spaced apart from each other and protruded from the mounting plate (32), and which have each a hole (40), into which the swing axle (16a) is inserted,
**that** the swing axle (16a) is arranged in a hole (38) of a swing bearing (37) arranged between the walls (36) and that the swing axle (16a) includes a thread hole that is arranged traverse to the swing axle (16a) and that is screwed into one End of the bolt (27).

2. Power rail holding device according to claim 1, **characterized in that** the hinge (16) is a pivot hinge, which swing axle (16a) is arranged traverse to the longitudinal extension of the power rail (2).

3. Power rail holding device according to claim 1 or 2, **characterized in that** the bolt (27) is pivotably mounted around its longitudinal axis, such that the mounting plate (32) is pivotable around the longitudinal axis of the bolt (27).

4. Power rail current device according to claim 1, **characterized in that** the end of the bolt (27) is in contact with the swing axle (16a).

5. Power rail current device according to one of the claims 1 to 4, **characterized in**
**that** the swing bearing (37) includes a hole running traverse to the bolt (27) and traverse to the swing axle (16a) and also partly protruding through the end of the bolt (27) and the swing axle (16a) and that a security pin (41) is inserted into this hole.

6. Power rail current device according to one of the claims 1 to 5, **characterized in**
**that** the bolt (27) and therewith the mounting plate (32) is movably mounted into the longitudinal direction of the bolt (27) in a resilient way.

## Revendications

1. Dispositif de maintien de rail conducteur ayant une plaque de connexion (32) sur laquelle peut être fixé un rail conducteur (2), dans lequel la plaque de connexion (32) est reliée à un mandrin (27), lequel peut être connecté à une structure porteuse fixe (5, 6, 7, 9), **caractérisé**
**en ce que** la plaque de connexion (32) est reliée au mandrin (27) par l'intermédiaire d'une articulation (16),
**en ce que** la plaque de connexion (32) est fixée rigidement selon une orientation transversale par rapport à l'extension longitudinale du rail conducteur,
**en ce que** la plaque de connexion (32) comporte deux parois (36) s'étendant à l'écart l'une de l'autre et en saillie de la plaque de connexion (32), lesquelles ayant chacune un alésage (40) dans lequel l'axe de pendule (16a) est engagé,
**en ce que** l'axe de pendule (16a) est disposé dans un alésage (38) d'un palier à rotule (37) engagé entre les parois (36) et en ce que le palier à rotule (37) comporte un trou taraudé disposé transversalement par rapport à l'axe de pendule (16a) et dans lequel une extrémité du mandrin (27) est vissée.

2. Dispositif de maintien de rail conducteur selon la revendication 1, **caractérisé**
**en ce que** l'articulation (16) est une articulation à pivot, dont l'axe de pendule (16a) est orienté transversalement par rapport à l'extension longitudinale du rail conducteur (2).

3. Dispositif de maintien de rail conducteur selon l'une des revendications 1 ou 2, **caractérisé**
**en ce que** le mandrin (27) est montée à rotation autour de son axe longitudinal et de telle sorte que la plaque de connexion (32) est montée à rotation autour de l'axe longitudinal du mandrin (27).

4. Dispositif de maintien de rail conducteur selon la revendication 1, **caractérisé**
**en ce que** l'extrémité du mandrin (27) reste en contact de l'axe de pendule (16a).

5. Dispositif de maintien de rail conducteur selon l'une des revendications 1 ou 4, **caractérisé**
**en ce que** le palier à rotule (37) comporte un trou qui s'étend transversalement par rapport au mandrin (27) et transversalement par rapport à l'axe de pendule (16a) et qui traverse partiellement l'extrémité du mandrin (27) et l'axe de pendule (16a), et en ce qu'une goupille de blocage (41) est engagée dans ce trou.

6. Dispositif de maintien de rail conducteur selon l'une quelconque des revendications 1 à 5, **caractérisé**
**en ce que** le mandrin (27) et ainsi la plaque de liaison (32) sont montés élastiquement déplaçables selon la direction longitudinale du mandrin (27).
